# EUROPÄISCHE PATENTANMELDUNG

(11) **EP 2 040 169 A2**
(43) Veröffentlichungstag der Anmeldung: **25.03.2009**
(21) Anmeldenummer: 08013504.9
(22) Anmeldetag: 26.07.2008
(51) Int. Cl.: G06F 11/26

(54) **Vorrichtung zur Funktionsprüfung eines Zielsystems**

(30) Priorität: 11.09.2007 DE 102007043267
(71) Anmelder: IT-Designers GmbH, 73730 Esslingen (DE)
(72) Erfinder: Ulmer, Daniel, 71083 Herrenberg (DE); Bühler, Oliver, 73266 Bissingen/Teck (DE)
(74) Vertreter: Ruckh, Rainer Gerhard

(57) **Zusammenfassung**

Die Erfindung betrifft eine Vorrichtung (1) zur Funktionsprüfung eines Zielsystems (2). Die Vorrichtung umfasst eine Rechnereinheit (3) und ein auf der Rechnereinheit (3) installiertes Simulationsmodul (3a). Das Zielsystem (2) ist über ein Echtzeit-Ethemet-System (4) an die Rechnereinheit (3) angeschlossen, so dass zur Funktionsprüfung mittels des Simulationsmoduls (3a) generierte Ausgangssignale über das Echtzeit-Ethemet-System (4) an das Zielsystem (2) übertragen und darauf vom Zielsystem (2) generierte Antwortsignale über das Echtzeit-Ethemet-System (4) in das Simulationsmodul (3a) zurück übertragen werden. Dabei erfolgt mittels des Echtzeit-Ethernet-Systems (4) eine Echtzeitverarbeitung der Ausgangs- und Antwortsignale.

## Beschreibung

Die Erfindung betrifft eine Vorrichtung zur Funktionsprüfung eines Zielsystems.

Zielsysteme der in Rede stehenden Art bilden komplexe Systeme wie Prozesssteuerungen. Derartige Prozesssteuerungen werden in unterschiedlichen industriellen Bereichen eingesetzt. So können derartige Prozesssteuerungen als Steuerungen für Ampelanlagen, Steuerungen von Förderprozessen in der Lager- und Fördertechnik, beispielsweise von Paketsortieranlagen in Postzentren, Gepäcksortieranlagen in Flughäfen und dergleichen gebildet sein.

Bei der Entwicklung derartiger Zielsysteme wird noch im Entwicklungsstadium eine Funktionsprüfung mittels einer Simulationsumgebung durchgeführt. Die mit der Simulationsumgebung durchgeführte Simulation, das heißt Funktionsprüfung des Zielsystems, erfolgt noch im Entwicklungs- und Prototypenstadium bei der Firma, die damit beauftragt ist, das Zielsystem zu entwickeln. Die Simulationsumgebung umfasst dabei eine ein Simulationsmodul bildende Simulationssoftware, die auf einer Rechnereinheit, insbesondere einem Personalcomputer (PC), läuft. Mit der Simulationssoftware werden dann auf der Softwareebene die Funktionen des Zielsystems geprüft um festzustellen, ob die von der auftraggebenden Firma, bei welcher das Zielsystem installiert werden soll, in Spezifikationen, das heißt Lastenheften, festgehaltenen Anforderungen erfüllt werden. Um die Funktionalität des Zielsystems testen zu können, wird dabei auf der Softwareebene ein Simulationsmodell des Zielsystems erstellt. Die Simulationssoftware prüft, basierend auf dem Simulationsmodell durch Vorgabe vorgegebener Ausgangssignale und Analyse der von dem durch das Simulationsmodell beschriebenen Zielsystem generierten Antwortsignale, die Funktionalität des Zielsystems.

Ein prinzipielles Problem derartiger Simulationsumgebungen besteht darin, dass die Simulation ohne Bezug zur Zielhardware, auf der die durch die Simulation getestete Software des Zielsystems installiert werden muss, durchgeführt wird. Da sich somit die Hardware, auf welcher die Simulation durchgeführt wird, von der Zielhardware des Zielsystems unterscheidet, kann durch die durchgeführte Simulation keine Aussage darüber gemacht werden, ob die getestete Software des Zielsystems auf der zu installierenden Zielhardware fehlerfrei läuft. Insbesondere ist keine Aussage möglich, ob dann das Zielsystem im Zeitverhalten korrekt arbeitet. Dies stellt insbesondere bei schnell ablaufenden Steuerungssystemen einen gravierenden Nachteil dar, da dort die Komponenten der Zielhardware des Zielsystems oftmals eine zeitliche Begrenzung für schnell ablaufende Steuerungsvorgänge bilden, die das Timing der gesamten Steuerungsvorgänge beeinflussen können. Derartige Beeinflussungen können mit den geschilderten Simulationstechniken nicht untersucht werden.

Der Erfindung liegt die Aufgabe zugrunde, eine Vorrichtung der eingangs genannten Art bereitzustellen, mittels derer eine vollständige Prüfung eines Zielsystems, insbesondere auch hinsichtlich dessen Zeitverhaltens, ermöglicht wird.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Die Erfindung betrifft eine Vorrichtung zur Funktionsprüfung eines Zielsystems. Die Vorrichtung umfasst eine Rechnereinheit und ein auf der Rechnereinheit installiertes Simulationsmodul. Das Zielsystem ist über ein Echtzeit-Ethernet-System an die Rechnereinheit angeschlossen, so dass zur Funktionsprüfung mittels des Simulationsmoduls generierte Ausgangssignale über das Echtzeit-Ethernet-System an das Zielsystem übertragen und darauf vom Zielsystem generierte Antwortsignale über das Echtzeit-Ethernet-System in das Simulationsmodul zurück übertragen werden. Dabei erfolgt mittels des Echtzeit-Ethernet-Systems eine Echtzeitverarbeitung der Ausgangs- und Antwortsignale.

Bei der erfindungsgemäßen Vorrichtung wird das Zielsystem nicht durch eine Simulationssoftware getestet, die unabhängig und entkoppelt von der Zielhardware des Zielsystems ist. Vielmehr ist bei der Simulation das Zielsystem selbst, das heißt die Original-Zielhardware an die Rechnereinheit angeschlossen, auf der das Simulationsmodul, das heißt die Simulationssoftware installiert ist.

Wesentlich hierbei ist, dass die Rechnereinheit mit dem Simulationsmodul über ein Echtzeit-Ethernet-System, das heißt ein echtzeitfähiges Netzwerk, an das Zielsystem angeschlossen wird. Durch die Echtzeitverarbeitung von zwischen dem Simulationsmodul und dem Zielsystem ausgetauschten Signalen im Echtzeit-Ethernet-System wird eine Funktionsprüfung des Zielsystems unter Einbeziehung der Zielhardware des Zielsystems möglich.

Die Echtzeitfähigkeit des Echtzeit-Ethernet-Systems wird einerseits durch im Netzwerk vorhandene, synchronisierte Uhren gewährleistet, wodurch gewährleistet ist, dass Ereignisse innerhalb des Netzwerks gleichzeitig ablaufen können.

Desweiteren wird die Echtzeitfähigkeit des Echtzeit-Ethernet-Systems insbesondere durch ein Zeitschlitzverfahren gewährleistet, das sicherstellt, dass Teilnehmer des Netzwerks eine garantierte Übertragungsbandbreite erhalten. Dies bedeutet, dass durch eine echtzeitfähige Komponente des Echtzeit-Ethemet-Systems, in welchem eine globale Uhr installiert ist, eine Folge von bestimmten Zeitintervallen definiert wird. Darauf wird von dieser Komponente kontrolliert, dass Teilnehmer des Netzwerks jeweils in einem der Zeitintervalle definierte Aktionen, wie Signale aussenden, durchführen. Durch diese Zeitintervalleinteilung ergibt sich innerhalb des Netzwerks eine definierte maximale Latenz, die die Zeit definiert, die gebraucht wird, um Informationen von einem Teilnehmer zu einem anderen Teilnehmer des Netzwerks weiterzuleiten.

Diese Latenzen können durch sogenannte cut-through Verfahren gezielt minimiert werden. Bei Signalübertragungsverfahren im Echtzeit-Ethernet-System werden Daten durch sogenannte Ethernetframes, die Adressteile und Datenpakete enthalten, übertragen. Bei herkömmlichen Verfahren wird bei der Weiterleitung derartiger Ethernetframes von einem Teilnehmer zum nächsten jeweils der gesamte Inhalt des Ethernetframe von einem Teilnehmer gelesen und dann weitergeleitet. Bei einem cut-through Verfahren dagegen wird nicht der gesamte Inhalt der Nachricht, das heißt des Ethernetframes, gelesen, sondern nur ein Teil hiervon, worauf dann die Nachricht zum nächsten Teilnehmer weitergeleitet wird. Dadurch kann die Latenz innerhalb des Netzwerks, das heißt des Echtzeit-Ethernet-Systems signifikant, verkürzt werden. Dies ist dann vorteilhaft, wenn mit der Vorrichtung schnell ablaufende Prozesse simuliert werden sollen.

Zur Simulation der Umgebung des Zielsystems werden im Simulationsmodul, das heißt in der Simulationssoftware, Ausgangssignale generiert und auf das Echtzeit-Ethernet-System ausgegeben, welches die Ausgangssignale an das Zielsystem weiterleitet. Dabei sind die Ausgangssignale mit Zeitstempeln versehen, wobei die Zeitstempel definieren, wann das Ausgangssignal an das Zielsystem ausgegeben werden soll. Ebenso werden die vom Zielsystem hierauf als Antwortgrößen generierten Antwortsignale mit Zeitstempeln versehen. Durch die Echtzeitfähigkeit des Echtzeit-Ethernet-Systems und die Synchronisation der Uhren in diesem Netzwerk werden diese Ausgangs- und Antwortsignale im Echtzeit-Ethernet-System echtzeitfähig verarbeitet, so dass das Zeitverhalten des Zielsystems komplett getestet werden kann. So kann das Timing aufeinander folgender Prozesse in dem Zielsystem über die erfindungsgemäße Vorrichtung vollständig geprüft werden. Dabei erlaubt die Echtzeitverarbeitung im Echtzeit-Ethernet-System, insbesondere die Synchronisation der Uhren im Echtzeit-Ethernet-System, eine präzise zeitliche Auflösung von am Zielsystem gemessenen Größen. Da die Zielhardware des Zielsystems an die Simulationssoftware angeschlossen ist, werden die Prozessabläufe unter den späteren Arbeitsbedingungen des Zielsystems getestet, so dass insbesondere auch Einflüsse der Zielhardware des Zielsystems auf das Timing von mit dem Zielsystem durchzuführenden Prozessen exakt ermittelt werden können.

Vorteilhaft hierbei ist, dass die Rechnereinheit, auf welcher das Simulationsmodul installiert ist, weder echtzeitfähig sein muss noch hinsichtlich ihres Hardwareaufbaus, an die Zielhardware des Zielsystems angepasst sein muss. Es muss lediglich gewährleistet sein, dass die Rechnereinheit die einzelnen Arbeitsschritte bei der Simulation schneller ausführen kann als die Geschwindigkeit, mit der die Prozesse des Zielsystems ablaufen.

Systembedingt bildet das Echtzeit-Ethernet-System ein Netzwerk, bei welchem Ereignisse zu definierten, diskreten Zeitpunkten ablaufen. So werden Nachrichten von einem Teilnehmer des Netzwerks zum anderen Teilnehmer nur zu bestimmten Zeitpunkten versandt.

Aufgrund dessen eignet sich die erfindungsgemäße Vorrichtung besonders zur Durchführung sogenannter diskreter Simulationen. Bei diskreten Simulationen erfolgen Zustandsänderungen plötzlich, das heißt theoretisch unendlich schnell und zu diskreten Zeitpunkten. Damit lassen sich diskrete Simulationen besonders gut mit der erfindungsgemäßen Vorrichtung, deren Bestandteil ein Echtzeit-Ethernet-System ist, das ebenfalls nur zeitliche diskrete Vorgänge kennt, durchführen.

Jedoch können prinzipiell mit der erfindungsgemäßen Vorrichtung auch kontinuierliche Simulationen durchgeführt werden. Bei einer kontinuierlichen Simulation treten kontinuierliche Zustandsänderungen auf, das heißt die Zustände von Größen eines Simulationsmodells ändern sich kontinuierlich mit der Zeit.

Typischerweise werden solche kontinuierliche Zustandsänderungen mittels Differentialgleichungen beschrieben. Bei der numerischen Lösung derartiger Differentialgleichungen werden jedoch Stützstellenverfahren angewendet, bei welchen die Ort- und Zeitvariablen diskretisiert werden müssen. Damit bilden auch derartige Differentialgleichungen diskrete Prozesse, die auf das Echtzeit-Ethernet-System der erfindungsgemäßen Vorrichtung abgebildet werden können.

Gemäß einer ersten Ausführungsform kann die Ankopplung der Rechnereinheit mit dem Simulationsmodul an das Echtzeit-Ethernet-System dadurch erfolgen, dass in dem Simulationsmodul ein Proxy, das heißt ein Softwaremodul, das eine Stellvertreterfunktion erfüllt, integriert ist. Dieser Proxy übernimmt somit die Funktion einer in der Rechnereinheit integrierten Schnittstelleneinheit zum Echtzeit-Ethernet-System, wobei der Proxy alle Ausgangssignale des Simulationsmoduls an das Echtzeit-Ethernet-System weiterleitet und ebenso die in dem Zielsystem generierten Antwortgrößen vom Echtzeit-Ethernet-System dem Simulationsmodul zuführt.

Gemäß einer zweiten Ausführungsform wird die das Simulationsmodul bildende Simulationssoftware auf die Komponenten des Echtzeit-Ethernet-Systems, die in Form von Prozessen ausgebildet sind, geladen. Durch einen solchen Download der Simulationssoftware wird diese auf die Komponenten des Echtzeit-Ethernet-Systems verteilt, so dass dort die Simulation des Zielsystems durchgeführt werden kann. Die Rechnereinheit bildet dann nur noch ein Einbeziehungsweise Ausgangsmedium für den Simulationsprozess.

Bei beiden Ausführungsformen weist die erfindungsgemäße Vorrichtung eine hohe Modularität auf. Die Simulationssoftware, das heißt das Simulationsmodul, kann dabei einen modularen Aufbau aus verschiedenen Softwaremodulen aufweisen, die fallspezifisch über das Echtzeit-Ethernet-System an ein Zielsystem angeschlossen werden können.

Die Erfindung wird im Nachstehenden anhand der Zeichnungen erläutert. Es zeigen:
- Figur 1:: Erstes Ausführungsbeispiel einer Vorrichtung zur Funktionsprüfung eines Zielsystems.
- Figur 2:: Zweites Ausführungsbeispiel einer Vorrichtung zur Funktionsprüfung eines Zielsystems.
- Figur 3:: Erste Variante einer Kommunikation in einer Vorrichtung gemäß Figur 1 oder 2.
- Figur 4:: Zweite Variante einer Kommunikation in einer Vorrichtung gemäß Figur 1 oder 2.
- Figur 5:: Timing Diagramm für die Kommunikation gemäß Figur 3 oder 4.

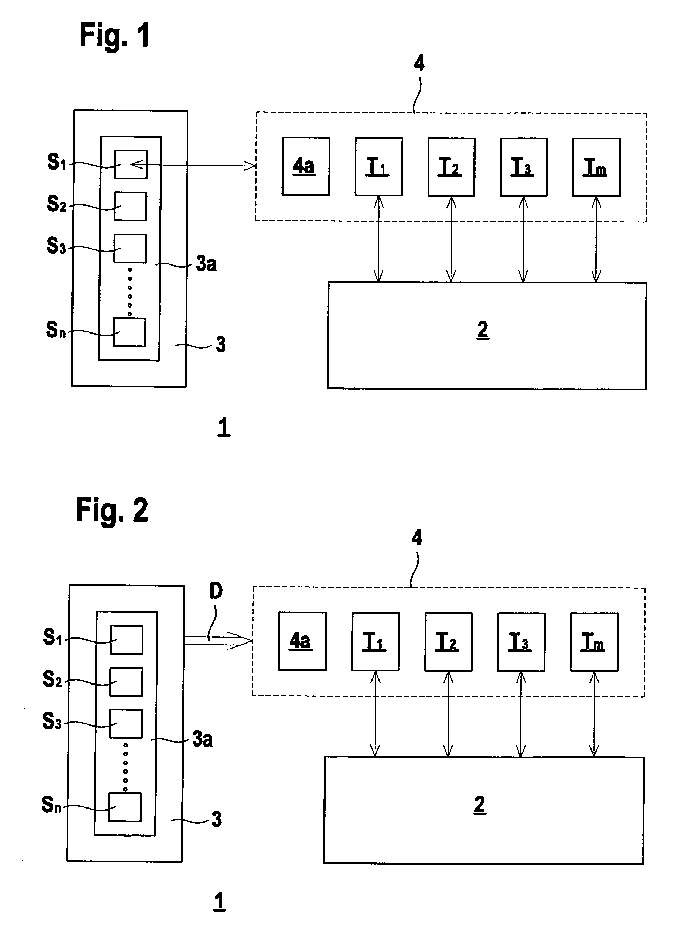

Figur 1 zeigt schematisch eine Vorrichtung 1 zur Simulation, das heißt zur Funktionsprüfung eines Zielsystems 2. Das Zielsystem 2 besteht im vorliegenden Fall aus einem Steuerungssystem, welches beispielsweise zur Steuerung einer Ampelanlage oder zur Steuerung einer Gepäcksortieranlage auf einem Flughafen dienen kann. Das Zielsystem 2 umfasst sowohl eine Software sowie eine Zielhardware, auf welcher die Software zu installieren ist.

Die Vorrichtung 1 gemäß Figur 1 umfasst eine Rechnereinheit 3 in Form eines Personalcomputers (PC). Auf dieser ist eine Simulationssoftware, im Folgenden Simulationsmodul 3a genannt, installiert, welche zur Funktionsprüfung des Zielsystems 2 dient. Das Simulationsmodul 3a besteht aus einer Vielzahl von Softwaremodulen S₁ .... Sₙ . Eines der Softwaremodule S₁ .... Sₙ bildet einen Proxy, mittels dessen die Rechnereinheit 3 mit dem Softwaremodul 3a an ein Echtzeit-Ethernet-System 4 angeschlossen ist. Das Echtzeit-Ethernet-System 4 ermöglicht eine echtzeitfähige Verarbeitung von Signalen, während die Rechnereinheit 3 nicht echtzeitfähig ist. Das Echtzeit-Ethernet-System 4 bildet ein Netzwerk mit einem Master 4a und mehreren Teilnehmern T₁ ....Tₙ, wobei diese Einheiten mit Prozessoren bilden. Die Teilnehmer T₁ ....Tₙ sind über Ein- und/oder Ausgänge an das Zielsystem 2 angeschlossen. Der physikalische Anschluss des Echtzeit-Ethernet-Systems 4 an die Rechnereinheit 3 kann dadurch realisiert sein, dass der Master 4a als Einsteckkarte in der Rechnereinheit 3 integriert ist.

Mit der Simulationssoftware, das heißt dem Simulationsmodul 3a, wird eine Simulation der Umgebung des Zielsystems 2 zu dessen Funktionsprüfung durchgeführt. In der Simulationssoftware wird die Umgebung des Zielsystems 2 durch ein Simulationsmodell definiert, welches mit geeigneten Zustandsvariablen beschrieben wird. Im vorliegenden Fall handelt es sich um eine diskrete Simulation, bei welcher Zustandsänderungen der Zustandsvariablen sprunghaft zu diskreten Zeitpunkten erfolgen.

Entsprechend der Definition des Simulationsmodells und der zugehörigen Zustandsvariablen werden im Simulationsmodul 3a Ausgangssignale generiert, welche über das Echtzeit-Ethernet-System 4 dem Zielsystem 2 zugeführt werden. Die im Zielsystem 2 darauf generierten Antwortsignale werden über das Echtzeit-Ethernet-System 4 wieder dem Simulationsmodul 3a zugeführt.

Gemäß einer vorteilhaften Ausgestaltung weist das Simulationsmodul 3a als Softwaremodule einen Optimierer und einen Monitor auf. Mit diesen Komponenten können im Rahmen der Simulation Optimierungsverfahren, insbesondere unter Verwendung evolutionärer Algorithmen, durchgeführt werden. Bei einem solchen Verfahren wird durch den Optimierer ein Satz beziehungsweise eine Anzahl von Parametern vorgegeben. Mit diesen Parametern wird im Simulationsmodul 3a dann eine Simulation derart durchgeführt, dass im Zielsystem 2 eine Reaktion erreicht wird. Der Monitor erfüllt eine Überwachungsfunktion derart, dass die Reaktion des Zielsystems 2 ausgewertet und analysiert wird.

Dabei wird in dem Monitor geprüft, inwieweit die Reaktion einem zuvor definierten Extremfall entspricht beziehungsweise wie weit die tatsächliche Reaktion von dem Extremfall entfernt ist. Der Abstand der Reaktion vom Extremfall wird dabei im Monitor nach zuvor festgelegten Kriterien berechnet. Der berechnete Abstand wird vom Monitor an den Optimierer zurückgemeldet. Der Optimierer kann, vorzugsweise auch in mehreren iterativen Schritten, die Parameter variieren und mit den variierten Parametern neue Simulationen starten um so Reaktionen des Zielsystems 2 zu generieren, die einen immer geringeren Abstand zum definierten Extremfall aufweisen.

Da bei der Vorrichtung 1 gemäß Figur 1 das Zielsystem 2 über das Echtzeit-Ethernet-System 4 an die Rechnereinheit 3 angeschlossen ist, wird die mit dem Simulationsmodul 3a durchgeführte Simulation mit der Zielhardware des Zielsystems 2 durchgeführt, das heißt exakt dem System, auf welchem das mit der Simulationssoftware zu testende Steuerungssystem im späteren Arbeitsbetrieb betrieben wird.

Die Rechnereinheit 3, auf der das Simulationsmodul 3a installiert ist, ist im Gegensatz zum Echtzeit-Ethernet-System 4 nicht echtzeitfähig. Die Bearbeitungsgeschwindigkeit der Rechnereinheit 3 ist größer als die Geschwindigkeiten der im Zielsystem 2 ablaufenden Prozesse.

Bei der Ausführungsform gemäß Figur 1 erfolgt die Ankopplung der Rechnereinheit 3 mit dem Simulationsmodul 3a an das Echtzeit-Ethernet-System 4 dadurch, dass ein Softwaremodul S₁ des Simulationsmoduls 3a als Proxy ausgebildet ist. Dieser Proxy oder Proxyserver bildet eine den Datenverkehr zum Echtzeit-Ethernet-System 4 vermittelnde Stellvertretereinheit derart, dass es die im Simulationsmodul 3a generierten Ausgangssignale an das Echtzeit-Ethernet-System 4 weiterleitet. Dabei erfolgt diese Ausgabe derart, dass die Ausgangssignale mit Zeitstempeln versehen sind. Die Zeitstempel definieren dabei die Zeitpunkte, wann die in den Ausgangssignalen definierte Aktionen vom Zielsystem 2 ausgeführt werden sollen. Die Verarbeitung der Ausgangssignale und deren Eingabe in das Zielsystem 2 erfolgt durch die Teilnehmer T₁ ....Tₙ des Echtzeit-Ethernet-Systems 4 in Echtzeit. Ebenfalls in einer Echtzeitverarbeitung werden die darauf im Zielsystem 2 generierten Antwortsignale im Echtzeit-Ethernet-System 4 behandelt und dann über den Proxy dem Simulationsmodul 3a zugeführt. Der Proxy ist damit eine Stellvertretereinheit innerhalb des Simulationsmoduls 3a, die in den Echtzeitring des Echtzeit-Ethernet-Systems 4 mit einbezogen ist.

Zur Gewährleistung einer Echtzeitverarbeitung weisen die Komponenten des Echtzeit-Ethernet-Systems 4 synchronisierte Uhren auf.

Durch die Echtzeitverarbeitung innerhalb des Echtzeit-Ethernet-Systems 4 kann das Zeitverhalten des Zielsystems 2 mit der Zielhardware komplett getestet und überprüft werden, wobei insbesondere das Timingverhalten des Zielsystems 2 abhängig von der konkreten Ausbildung der Zielhardware ermittelt und getestet werden kann.

Wenn in der Rechnereinheit 3 eine Zeitverletzung auftritt, das heißt ein Befehl nicht rechtzeitig ausgeführt werden kann, erfolgt eine Fehlermeldung, da der Fehler durch das Zeitstempelverfahren eindeutig aufgedeckt werden kann.

Eine Vorrichtung 1, deren Funktion der Vorrichtung 1 der Figur 1 entspricht, ist in Figur 2 dargestellt. Der einzige Unterschied zur Ausführungsform gemäß Figur 1 besteht bei der Ausführungsform gemäß Figur 2 darin, dass die Ankopplung der Rechnereinheit 3 mit dem Simulationsmodul 3a an das Echtzeit-Ethernet-System 4 nicht über einen Proxy erfolgt. Vielmehr erfolgt in diesem Fall ein Download (in Figur 2 gekennzeichnet mit dem mit D bezeichneten Pfeil), der Simulationssoftware auf die Komponenten des Echtzeit-Ethernet-Systems 4. Dabei werden einzelne Teile der Simulationssoftware auf die Prozessoren der Teilnehmer T₁ ....Tₙ des Echtzeit-Ethernet-Systems 4 geladen, wobei hierzu auf den Prozessoren eine geeignete Middleware installiert sein kann.

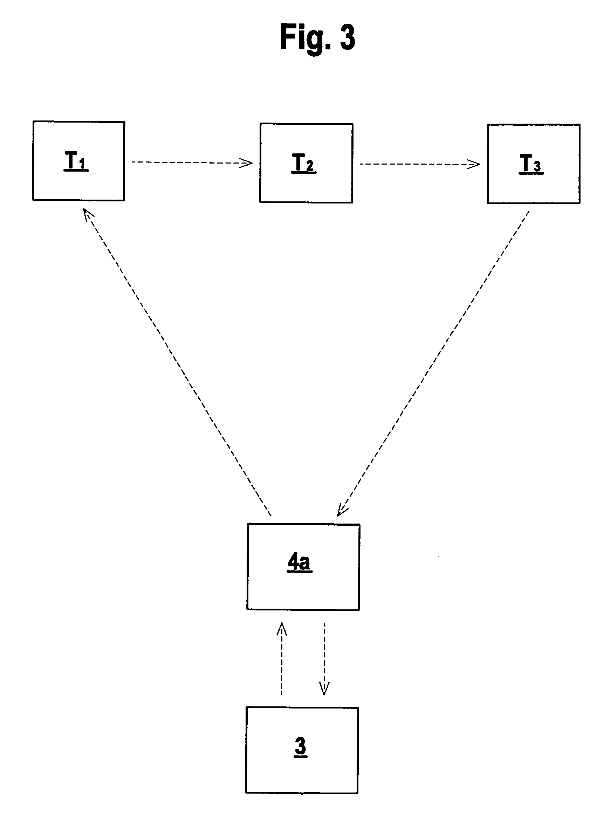

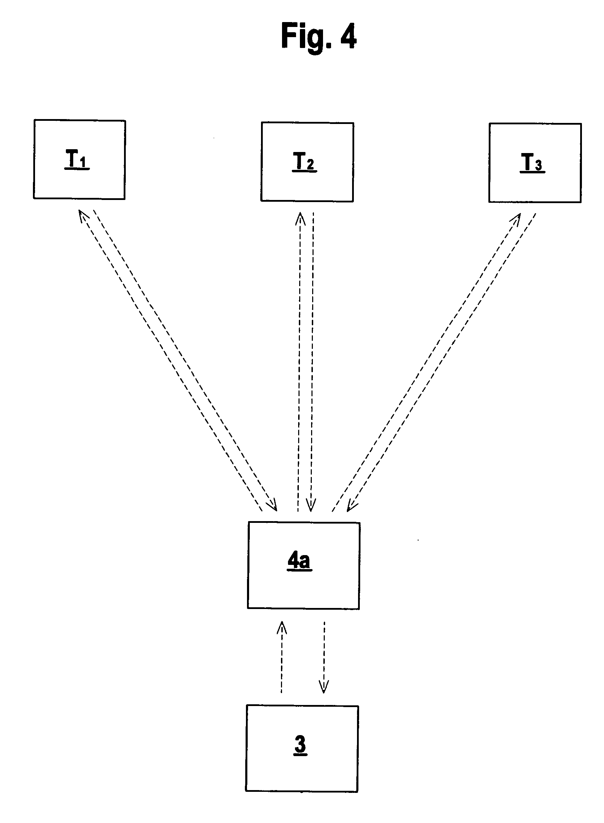

Die Figuren 3 und 4 zeigen zwei Varianten der Signalübertragung zwischen der Rechnereinheit 3 und Komponenten des Echtzeit-Ethernet-Systems 4, wobei in diesen Figuren zur Übersichtlichkeit nur der Master 4a und drei Teilnehmer T₁, T₂, T₃ dargestellt sind.

Bei dem Beispiel gemäß Figur 3 wird ein in der Rechnereinheit 3 generiertes Ausgangssignal dem Master 4a zugeführt. Dieser leitet dieses Ausgangssignal in Form eines Ethernetframe bestehend aus einem Adressteil und Datenteil an den Teilnehmer T₁, dieser leitet den Ethernetframe an den Teilnehmer T₂, welcher den Ethernetframe zum Teilnehmer T₃ weiterleitet, welcher schließlich über einen Ethernetframe eine Rückmeldung zum Master 4a schickt, worauf dieser ein Signal, insbesondere ein Antwortsignal, von dem Zielsystem 2 an die Rechnereinheit 3 weiterleitet.

Figur 4 zeigt ein Beispiel, bei welchem derselbe Übertragungsweg eines Ethernetframe vom Master 4a zum Teilnehmer T₁, dann zum Teilnehmer T₂ und schließlich zum Teilnehmer T₃ realisiert ist. Im Unterschied zum Beispiel gemäß Figur 3 erfolgt die Weiterleitung des Ethernetframe derart, dass dieser vom Master 4a erst zum Teilnehmer T₁ geschickt wird, worauf dieser eine Rückmeldung an den Master 4a sendet. Darauf sendet der Master 4a den Ethernetframe an den Teilnehmer T₂, worauf dieser eine Rückmeldung an den Master 4a sendet. Darauf sendet der Master 4a schließlich den Ethernetframe an den Teilnehmer T₃, worauf dieser eine Rückmeldung an den Master 4a sendet.

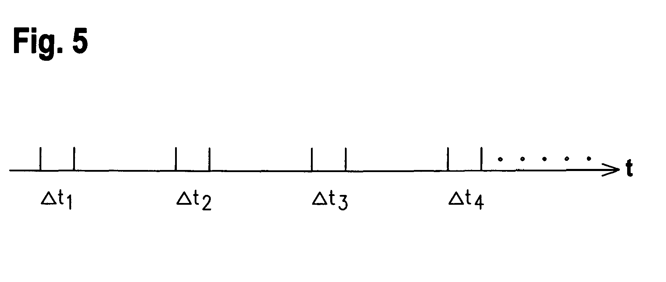

In beiden Ausführungsformen gemäß den Figuren 3 beziehungsweise 4 erfolgt zur Gewährleistung einer Echtzeitverarbeitung die vom Master 4a gesteuerte Übertragung innerhalb des Echtzeit-Ethernet-Systems 4 gemäß einem Zeitschlitzverfahren oder einem ähnlichen Verfahren. Der echtzeitfähige Master 4a, in welchem eine mit den Uhren der anderen Teilnehmer T₁ ....Tₙ synchronisierte Uhr integriert ist, stellt sicher, dass die einzelnen Teilnehmer T₁ ....Tₙ ihre Daten garantiert in vorgegebenen Zeitintervallen Δtₙ (n = 1, 2, 3), wie in Figur 5 dargestellt, das heißt in wohl definierten Zeitschlitzen, übertragen. So ist gewährleistet, dass für die Informationsübertragung, im Beispiel gemäß den Figuren 3 und 4 der Weiterleitung eines Datenpakets vom Teilnehmer T₁ zum Teilnehmer T₃, innerhalb einer garantierten Maximalzeit übertragen wird. Dabei definiert die garantierte maximale Übertragungszeit eines Teilnehmers T₁ ....Tₙ zum nächsten die Latenz des Echtzeit-Ethernet-Systems 4.

Die Latenz kann generell durch cut-through Technologien minimiert werden.
Bei herkömmlichen Datenübertragungen muss von einem Teilnehmer T₁ ....Tₙ des Echtzeit-Ethernet-Systems 4 ein Ethernetframe komplett gelesen werden, bevor er zum nächsten weitergeleitet wird. Bei Anwendung von cut-through Technologien werden diese Durchlaufzeiten dadurch verkürzt, dass von einem Teilnehmer T₁ ....Tₙ nur noch der Adressteil des Ethernetframe gelesen wird und darauf dieser sofort zum nächsten Teilnehmer T₁ ....Tₙ weitergeleitet wird.

Durch die Echtzeitverarbeitung im Echtzeit-Ethernet-System 4 ist gewährleistet, dass die Ausgangssignale zu den in den Zeitstempeln definierten Sollzeiten exakt dem Zielsystem 2 zugeführt werden. Weiter ist durch das Echtzeit-Ethernet-System 4 gewährleistet, dass die Antwortsignale als Reaktionen auf die Ausgangssignale in Echtzeit zurück zur Rechnereinheit 3 übertragen werden. Dadurch wird eine präzise, hohe zeitliche Auflösung der gemessenen Antwortsignale auf die in der Simulation generierten Ausgangssignale erhalten. Damit kann mit der erfindungsgemäßen Vorrichtung 1 das Timingverhalten des Zielsystems 2 an der originalen Zielhardware exakt geprüft werden. Voraussetzung hierfür ist lediglich die entsprechend hohe Bearbeitungsgeschwindigkeit der Rechnereinheit 3, die größer ist als die Geschwindigkeiten der Prozesse im Zielsystem 2. Dadurch können die einzelnen Ausgangsgrößen zu den in den Zeitstempeln definierten Zeiten dem Zielsystem 2 zugeführt werden und die Reaktionen hierauf durch die Echtzeitverarbeitung zeitaufgelöst gemessen werden.

IT-Designers GmbH 73730 Esslingen, DE

### Bezugszeichenliste

- (1): Vorrichtung
- (2): Zielsystem
- (3): Rechnereinheit
- (3a): Simulationsmodul
- (4): Echtzeit-Ethernet-System
- (4a): Master

## Patentansprüche

1. Vorrichtung (1) zur Funktionsprüfung eines Zielsystems (2) mit einer Rechnereinheit (3) und einem auf der Rechnereinheit (3) installierten Simulationsmodul (3a), **dadurch gekennzeichnet, dass** das Zielsystem (2) über ein Echtzeit-Ethernet-System (4) an die Rechnereinheit (3) angeschlossen ist, so dass zur Funktionsprüfung mittels des Simulationsmoduls (3a) generierte Ausgangssignale über das Echtzeit-Ethernet-System (4) an das Zielsystem (2) übertragen und darauf vom Zielsystem (2) generierte Antwortsignale über das Echtzeit-Ethernet-System (4) in das Simulationsmodul (3a) zurück übertragen werden, wobei mittels des Echtzeit-Ethernet-Systems (4) eine Echtzeitverarbeitung der Ausgangs- und Antwortsignale erfolgt.

2. Vorrichtung nach Anspruch 1, **dadurch gekennzeichnet, dass** die Rechnereinheit (3) nicht echtzeitfähig ist.

3. Vorrichtung nach Anspruch 2, **dadurch gekennzeichnet, dass** die Datenverarbeitungsgeschwindigkeit der Rechnereinheit (3) größer ist als die Geschwindigkeit von im Zielsystem (2) ablaufenden Programmen.

4. Vorrichtung nach einem der Ansprüche 1 bis 3, **dadurch gekennzeichnet, dass** von dem Simulationsmodul (3a) ausgegebene Ausgangssignale mit jeweils einem Zeitstempel versehen sind.

5. Vorrichtung nach Anspruch 4, **dadurch gekennzeichnet, dass** ein Zeitstempel den Zeitpunkt definiert, wann das Ausgangssignal an das Zielsystem (2) angelegt werden soll.

6. Vorrichtung nach einem der Ansprüche 1 bis 5, **dadurch gekennzeichnet,**
**dass** das Echtzeit-Ethernet-System (4) ein Netzwerk bildet in welchem durch eine netzwerkweite Uhrensynchronisation Ereignisse gleichzeitig durchführbar sind.

7. Vorrichtung nach einem der Ansprüche 1 bis 6, **dadurch gekennzeichnet, dass** diese Mittel aufweist, durch welche jeder Teilnehmer des Echtzeit-Ethernet-Systems (4) eine garantierte Übertragungsbandbreite erhält.

8. Vorrichtung nach Anspruch 7, **dadurch gekennzeichnet, dass** als Mittel Zeitschlitzverfahren eingesetzt werden.

9. Vorrichtung nach Anspruch 7 oder 8, **dadurch gekennzeichnet, dass** Latenzen zwischen einzelnen Teilnehmern des Echtzeit-Ethernet-Systems (4) durch cut-through Technologien minimiert sind.

10. Vorrichtung nach einem der Ansprüche 1 bis 9, **dadurch gekennzeichnet, dass** das Simulationsmodul (3a) einen Proxy enthält, der die Ausgangssignale des Simulationsmodus an das Echtzeit-Ethernet-System (4) weiterleitet und der die Antwortsignale vom Echtzeit-Ethernet-System (4) aufnimmt und an das Simulationsmodul weitergibt.

11. Vorrichtung nach einem der Ansprüche 1 bis 9, **dadurch gekennzeichnet, dass** das Simulationsmodul (3a) eine Software bildet, die auf Komponenten des Echtzeit-Ethernet-Systems (4) ladbar und ausführbar ist.

12. Vorrichtung nach einem der Ansprüche 1 bis 11, **dadurch gekennzeichnet, dass** das Simulationsmodul (3a) einen Optimierer und einen Monitor aufweist, wobei zur Durchführung einer Simulation mittels des Optimierers ein Satz von Parametern vorgebbar ist, und wobei im Monitor eine Reaktion des Zielsystems (2) dahingehend auswertbar ist, wie weit diese Reaktion von einem zuvor definierten Extremfall entfernt ist.
